(19) Europäisches Patentamt
European Patent Office
Office européen des brevets

(11) **EP 0 807 216 B1**

(12) **FASCICULE DE BREVET EUROPEEN**

(45) Date de publication et mention
de la délivrance du brevet:
**07.07.1999 Bulletin 1999/27**

(21) Numéro de dépôt: **96903040.2**

(22) Date de dépôt: **02.02.1996**

(51) Int Cl.⁶: **F16F 7/10**, F16F 15/03

(86) Numéro de dépôt international:
**PCT/FR96/00176**

(87) Numéro de publication internationale:
**WO 96/23986 (08.08.1996 Gazette 1996/36)**

(54) **DISPOSITIFS DE REDUCTION DE VIBRATIONS A COMMANDE ACTIVE CONSTITUES DE MASSES MOBILES EXCITEES PAR DES ELECTRO-AIMANTS SELON 2 OU 3 AXES**

VORRICHTUNG ZUR VIBRATIONSVERMINDERUNG DURCH AKTIVE REGELUNG, BESTEHEND AUS IN ZWEI ODER DREI ACHSRICHTUNGEN ELEKTROMAGNETISCH ERREGTEN, SCHWINGENDEN MASSEN

VIBRATION DAMPING DEVICES WITH ACTIVE CONTROL AND COMPRISING MOVABLE WEIGHTS EXCITED BY ELECTROMAGNETS ALONG 2 OR 3 AXES

(84) Etats contractants désignés:
**DE ES FR GB IT NL SE**

(30) Priorité: **03.02.1995 FR 9501260**

(43) Date de publication de la demande:
**19.11.1997 Bulletin 1997/47**

(73) Titulaire: **Mesure et Informatique Mei**
**78112 Fourqueux (FR)**

(72) Inventeur: **CLAUSIN, Jacques**
**F-78112 Fourqueux (FR)**

(74) Mandataire: **King, Dominic et al**
**Cabinet Beau de Loménie**
**158, rue de l'Université**
**75340 Paris Cedex 07 (FR)**

(56) Documents cités:
EP-A- 0 509 911          WO-A-92/01876
FR-A- 2 692 329          US-A- 3 690 414
US-A- 4 922 159          US-A- 4 963 804

- **PATENT ABSTRACTS OF JAPAN vol. 007, no. 169 (M-231), 26 Juillet 1958 & JP,A,58 074931 (HITACHI SEISAKUSHO KK), 6 Mai 1983,**

## Description

La présente invention concerne les dispositifs de réduction de vibrations constitués de masses mobiles suspendues élastiquement et déplacées par des moteurs électromagnétiques dans des directions opposées aux sens des vibrations à réduire, la commande du moteur électromagnétique étant asservie à la vibration à réduire de façon à ce que cette dernière diminue d'une valeur imposée à l'avance.

L'invention trouve son application partout où la réduction des vibrations est une nécessité stratégique ou économique: marine de guerre, véhicules terrestres ou marins, avions civils et généralement partout où la présence de vibrations est gênante.

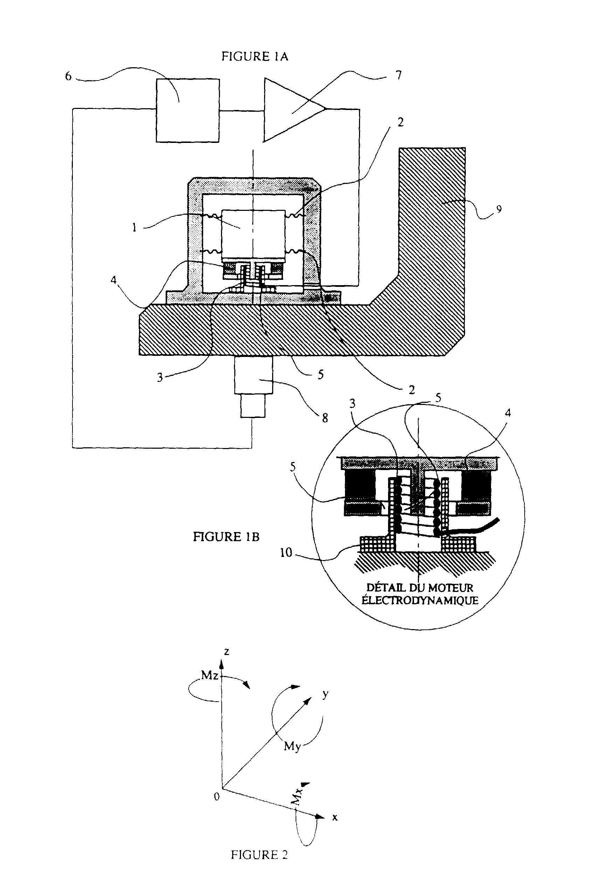

Une disposition habituelle est schématisée par les figures 1A et 1B, la figure 1B représentant une vue en coupe agrandie d'une partie de la figure 1A. La masse mobile (1) est suspendue par les ressorts (2). Le moteur électrodynamique est constitué d'une bobine (3) parcourue par un courant alternatif homologue du déplacement du bâti et d'un aimant (4) fournissant un champ magnétique dans l'entrefer (5). La masse mobile (1) est alors sollicitée de la même façon que la membrane d'un haut parleur.

Le régulateur (6) et l'amplificateur (7) fournissent le courant de commande de la bobine (3), calculé en fonction des amplitudes vibratoires mesurées par l'accéléromètre (8), placé sur la structure de la machine (9).

Si m est la masse de la machine et v sa vitesse avant l'application du dispositif, et M et V masse de la masse mobile (1) et V sa vitesse vibratoire, alors lorsque M.V - m.v = 0, la vitesse vibratoire de la machine est annulée.

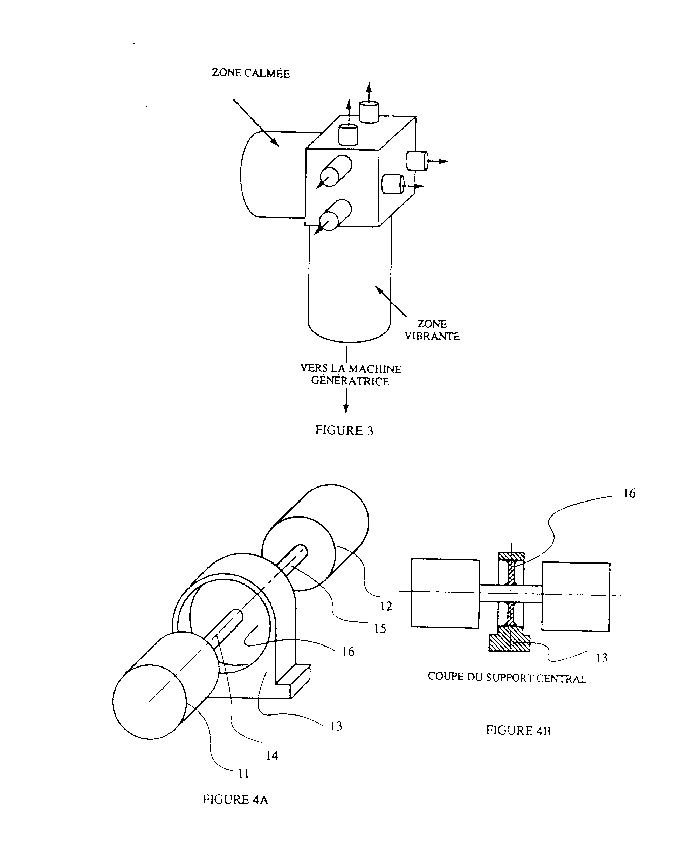

Utilisée dans des conditions réelles, la disposition habituelle figure 1 présente l'inconvénient d'être lourde et encombrante, car il est nécessaire, pour réduire la propagation des vibrations d'une machine vers l'environnement, de diminuer les 6 composantes mécaniques de la vibration en un point qui sont (figure 2) :

- les 3 vitesses vibratoires selon les 3 axes Ox, Oy et Oz,
- les 3 moments de rotation selon les 3 axes Ox, Oy et Oz.

Il faut donc pour obtenir une réduction appréciable des vibrations, 6 dispositifs placés comme l'indique, par exemple, la figure 3. les amplificateurs, régulateurs et leurs circuits annexes ainsi que les accéléromètres de mesure ne sont pas représentés: seuls les 6 dispositifs sont représentés.

Un autre inconvénient de ces dispositifs résulte de la difficulté d'évacuation des calories générées par le courant traversant la bobine (3) figure 1 qui est isolée thermiquement de la structure, car le support (10) figure 1, obligatoirement constitué d'un matériau non conducteur de l'électricité, n'est donc pas un bon conducteur thermique, réduisant ainsi l'écoulement des calories vers d'autres endroits plus froids.

Pour pallier cet inconvénient qui réduit la durée de vie de ce type de dispositif due en particulier au vieillissement thermique et mécanique des isolants électriques, il est souvent nécessaire d'adjoindre un ventilateur de brassage, dont le fonctionnement même génère des vibrations se superposant aux amplitudes à réduire, ou même des systèmes de refroidissement à circulation de liquide réfrigérant.

Ccttc limitation interdit le fonctionnement de cette disposition pour les applications à températures élevées.

Enfin un dernier inconvénient provient de ce que la suspension de la masse active s'effectue souvent par des ressorts annulaires appelés couramment speeders à durée de vie limitée et incertaine. Outre l'inconvénient d'une durée de vie limitée ou incertaine car mal calculable, cette configuration est encombrante, volumineuse et lourde.

Ces inconvénients font que ce type de dispositif ou ses variantes n'ont guère été utilisés industriellement et sont plus destinés au monde des essais en laboratoire.

Cette conception ancienne s'est imposée par la relation linéaire existant entre le courant de commande et la force générée, cette disposition étant obligatoire lorsque la commande de l'asservissement se fonde sur les principes de l'électronique analogique.

Actuellement cette contrainte de linéarité est disparue avec l'avènement des régulateurs et des dispositifs de commande numériques.

Le dispositif selon l'invention apporte une solution économique aux défauts des précédents dispositifs : il est fiable et endurant, compact et léger et capable d'utilisation à haute température: il fait appel à des technologies adoptées universellement par l'industrie pour leur robustesse.

Selon l'invention les améliorations apportées sont dues à une conception originale, basée

- sur l'adoption d'un mouvement des masses actives plan ou triaxial,
- de plusieurs moteurs constitués d'électro-aimants dont l'efficacité et l'endurance sont bien connues.

Ainsi, l'invention fournit un dispositif de réduction des vibrations constituée d'au moins une masse active animée d'un mouvement plan ou triaxial et de plusieurs moteurs constitué d'électro-aimants, cette masse étant supportée par des moyens élastiques. Un tel dispositif est connu du document EP-A-0509911. L'invention est caractérisée par le fait que deux masses actives animées d'un mouvement plan ou triaxial sont prévues supportées par lesdits moyens élastiques constitués de deux plaques cylindriques souples ou d'une tige cylindrique souple et de deux articulations élastiques.

Des modes de réalisation de l'invention apparaissent dans les revendications qui sont incorporées ici entièrement par référence.

L'invention a l'avantage de réduire le poids et le volume dans un rapport de 3 à 4, comparé aux poids et volume des dispositifs traditionnels, car un seul dispositif selon l'invention remplace 2 voir 3 dispositifs traditionnels.

L'invention couvre également l'application du dispositif de réduction des vibrations à la propagation de vibrations de pièces ou de machines, telles que conduites, notamment conduites d'amenée de vapeur aux turbines motrices, conduites d'échappement de moteur thermique, supports élastiques, arbres de couche.

Deux dispositions sont plus particulièrement revendiquées selon l'invention: la première disposition concerne les applications à haute température. Le dispositif selon l'invention associe' masses couplées et animées d'un mouvement plan et 2 ou 4 électro-aimants placés à une extrémité la plus éloignée de la source de chaleur.

La seconde disposition concerne les applications à température inférieure. Le dispositif selon l'invention associe alors 1 masse animée d'un mouvement triaxial et plusieurs électro-aimants aux forces d'attraction orientées selon 3 axes perpendiculaires, provoquant le mouvement de la dite masse.

Selon l'invention, l'attraction des électro-aimants s'effectuant selon une loi non linéaire variant approximativement comme une puissance du second degré du courant électrique de commande, le courant d'excitation des électro-aimants est donc corrigé en conséquence.

Les deux descriptions préférentielles non limitatives suivantes explicitent les innovations revendiquées par l'invention.

La première description correspond à une variante du dispositif applicable à la réduction de la propagation des vibrations de pièces ou de machines soumises à des températures élevées telles que les conduites d'amenée de vapeur aux turbines motrices, ou les conduites d'échappement de moteurs thermiques, par exemple. Elle s'applique bien entendu aux autres cas.

La deuxième description correspond à une application à température moyenne ou basse, et concerne toutes les zones par où se propagent les vibrations: conduites, supports élastiques, arbres de couche, etc..

DESCRIPTION DES FIGURES :

- Les figures 1 à 3 représentent une disposition de l'art antérieur, la figure 1B représentant une coupe agrandie d' une partie de la figure 1A.
- Les figures 4 à 6 représentent un premier mode de réalisation de l'invention, la figure 4A représentant une vue en perspective et la figure 4B une vue en coupe d'un dispositif scanner constitué de deux masses actives liées à un support central par deux bras élastiques.

- Les figures 7 et 8 concernent un dispositif selon l'invention destiné aux applications aux températures élevées, la figure 7A étant une coupe longitudinale, la figure 7B étant une vue de face des électro-aimants et de leur fixation, tandis que les figures 8A, 8B, 8C représentent l'intensité du courant en ordonnées et en fonction du temps en abscisses.

- Les figures 9A et 9B décrivent un deuxième mode de réalisation du dispositif de réduction des vibrations selon l'invention, particulièrement adapté aux températures moyennes ou basses.

- Les figures 10 à 13 décrivent un mode de réalisation préférentiel d'un dispositif de réduction des vibrations selon la présente invention; la figure 10 étant une coupe longitudinale, la figure 11 une vue selon AA de la figure 10 et la figure 13 une demi-coupe selon un plan passant par l'axe XX et l'axe d'un des électro-aimants d'axe actif XX'.

- Les figures 14A et 14B montrent l'application d un dispositif réducteur des vibrations selon I invention en amont d'une suspension élastique (figures 14A et 14B) ou le long de tuyaux, poutres, etc. (figure 15).

DESCRIPTION DU DISPOSITIF DESTINE AUX APPLICATIONS A HAUTES TEMPERATURES

Avant de procéder à cette description, il est utile d'expliquer le principe de mécanique utilisé.

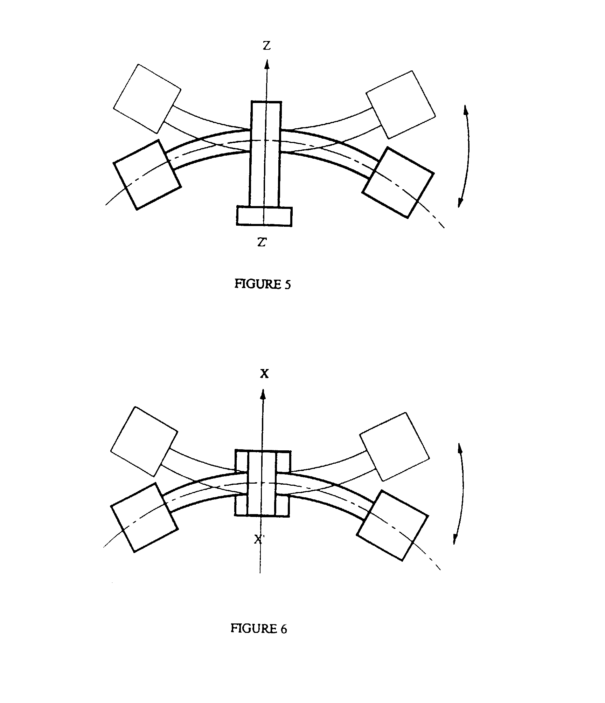

La figure 4A représente une vue perspective, et la figure 4B une vue en coupe d' un dispositif planaire constitué de 2 masses actives (11) et (12), liées à un support central (13) par 2 bras élastiques (14) et (15), réunis au support central par une plaque cylindrique fine (16), dont ils font partie intégrante. Cette plaque cylindrique (16) est liée à sa périphérie par un moyen connu, comme la brasure, au support central (13). Cette plaque cylindrique (16), par son élasticité propre, provoque un couplage des 2 bras (14) et (15) qui ne peuvent avoir qu'un seul mode de déplacement vibratoire symétrique par rapport au plan de symétrie du support central ( 13) comme le montrent les figures 5 et 6.

Un tel dispositif est capable de jouer le rôle d'amortisseur dynamique lorsque la fréquence excitatrice est égale à la fréquence propre des bras élastiques (14) et (15) et des masses actives 20 (11) et (12) donnée par la formule bien connue :

$$f_0 = \frac{1}{2\pi} \sqrt{\frac{k}{M}}$$

k étant la raideur d'un bras,
M étant la masse d'une des masses actives.

L'expérience et les calculs montrent cependant que les fréquences propres selon les axes ZZ' (figure 5) ou XX' (figure 6) sont différentes.

Tel quel, ce dispositif ne peut donc jouer seul le rôle d'amortisseur dynamique plan (ou bi-axial).

De plus, la longueur des bras élastiques (14) et (15) rend le dispositif très encombrant. Enfin, son fonctionnement est limité à un domaine de fréquences réduit, proche de la fréquence de la résonance fo.

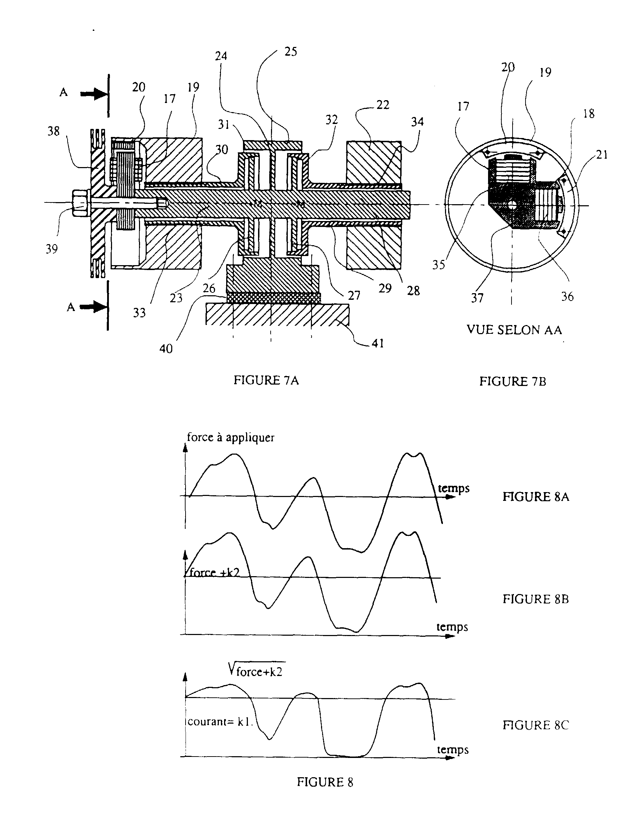

Le dispositif destiné aux applications à hautes températures selon l'invention décrit figure 7A qui est une coupe longitudinale et 7B qui est une vue de face des électro-aimants et de leur fixation apporte une solution à ces 3 inconvénients. Pour réduire les encombrements, les bras élastiques (14) et (15) figure 4 sont remplacés par (figure 7) 2 plaques cylindriques de faible épaisseur, donc souples (26) et (27) formant un ensemble monobloc avec l'âme cylindrique (23), la plaque cylindrique de couplage (24) et l'âme cylindrique (28) usinées avec précision dans un alliage à hautes caractéristiques mécaniques.

Les 2 plaques cylindriques (26) et (27) ont une disposition symétrique par rapport au plan de la plaque cylindrique (24) et sont fixées par brasage ou tout autre moyen connu chacune à 2 tubes (29) et (30) présentant chacun à une extrémité une collerette (31) et (32) et à l'autre extrémité une partie filetée mâle (33) et (34).

Les 2 masses (19) et (22) de forme cylindrique, comportent elles aussi un filetage femelle leur permettant de se visser sur les tubes (29) et (30), de manière à régler les fréquences propres de l'ensemble.

Le mouvement des 2 masses (19) et (22) est alors un mouvement de pivotement autour des points M et M' situés au centre des 2 plaques (26) et (27).

Selon l'invention, cette disposition condense les dimensions tout en maintenant le couplage entre les 2 systèmes dynamiques constitués des masses (19) et (22) et des raideurs dues aux plaques (26) et (27), assuré par la plaque cylindrique (24), fixée à sa périphérie intimement par brasage ou tout autre moyen au support (25).

Pour assurer un fonctionnement bi-axial et étendre le domaine des fréquences d'activité, le dispositif selon l'invention comporte au moins 2 électro-aimants (17) et (18) qui - dans le cas de figure - utilisent une même culasse constituée d'un empilage de tôles en matériau magnétique doux (37), et 2 bobines (35) et (36). Ces 2 électro-aimants (17) et (18) attirent la masse (19) selon 2 directions perpendiculaires par l'intermédiaire de 2 segments circulaires constitués d'un empilage de tôles en matériau magnétique doux (20) et (21) solidaires de la masse (19).

Les 2 électro-aimants sont fixés à une âme cylindrique (23), partie intégrante de la plaque cylindrique de couplage (24) et donc du support (25), choisie pour sa position la plus éloignée de la source de chaleur.

Ainsi, la commande du courant des 2 bobines (35) et (36) apporte un pilotage en force du mouvement vibratoire de la masse (19) dont le mouvement provoque un mouvement symétrique par rapport au plan de la plaque cylindrique (24) de la masse (22).

Pour faciliter la compréhension des dessins, les fils électriques de liaison des bobines n'ont pas été représentés.

Selon l'invention l'attraction magnétique obéissant à une loi proportionnelle au carré du courant, le pilotage des électro-aimants s'effectue selon une loi définie et revendiquée ci-après, dont la génération ne présente aucune difficulté numérique et décrite figures 8A, 8B, 8C.

$$\text{Courant } I_{(t)} = k_1 \sqrt{[F_{(t)} + k_2]}$$

La constante k2 est une valeur numérique choisie de façon que dans le domaine d'action, jamais la somme Y(t) = F(t) + k2 ne devienne négative (figure 8C).

La constante k1 est un facteur de proportionnalité.

Les électro-aimants (17) et (18) étant placés à l'extrémité de l'ensemble, sont solidaires d'une partie cylindrique (38) en alliage très conducteur de la chaleur formant refroidisseur par convection aérienne, fixée par un moyen connu (39).

Le support (25) est fixé au bâti ou à la structure (41) dont il faut réduire les vibrations par l'intermédiaire d'une semelle en matière isolante de la chaleur (40), d'excellentes qualités mécaniques, par exemple un composite à base de mica.

Cette structure permet ainsi, pour une température du bâti élevée, par exemple, de 300°C de ne pas dépasser 100°C au droit des bobines (35) et (36), ce qui autorise une force de commande importante, l'échauffement des bobines du à l'effet Joule, pouvant alors être de 100°C sans altérer les isolations électriques des fils conducteurs.

Selon l'invention, cette force de commande importante permet de provoquer un mouvement vibratoire des masses (19) et (22) suffisant pour que le dispositif soit efficace dans un domaine fréquenciel très large, allant de quelques Hertz à plusieurs centaines de Hertz. Ainsi cette force de commande importante permet de faire fonctionner l'ensemble en deçà et au delà de sa fréquence de résonance, ce qui présente l'avantage incomparable d'utiliser une fréquence de résonance élevée, et donc d'éviter les flèches statiques trop importantes des dispositifs à fréquences de résonance faibles, tels que les dispositifs précédemment utilisés.

Selon l'invention le jeu radial entre les 2 âmes cylindriques (23) et (28) et les 2 tubes (29) et (30) est suffisamment faible pour qu'en cas de choc, les 2 tubes (29) et (30) viennent s'appuyer sur les 2 âmes cylindriques (23) et (28) afin de limiter les déformations dans les plaques (26) et (27) au domaine élastique du matériau.

Cette disposition évite toute destruction due à un dépassement des limites d'utilisation des matériaux, en cas de choc ou de déplacements vibratoires trop importants.

DESCRIPTION DU DISPOSITIF DESTINE AUX TEMPERATURES MOYENNES OU BASSES

La deuxième description préférentielle correspond à un dispositif de réduction des vibrations selon 3 axes destiné aux applications à température moyenne ou basse, de construction économique robuste et compacte. Bien entendu, le dispositif peut aussi se limiter à un mouvement plan.

Avant de procéder à la description du dispositif revendiqué il est utile d'expliquer le principe mécanique utilisé.

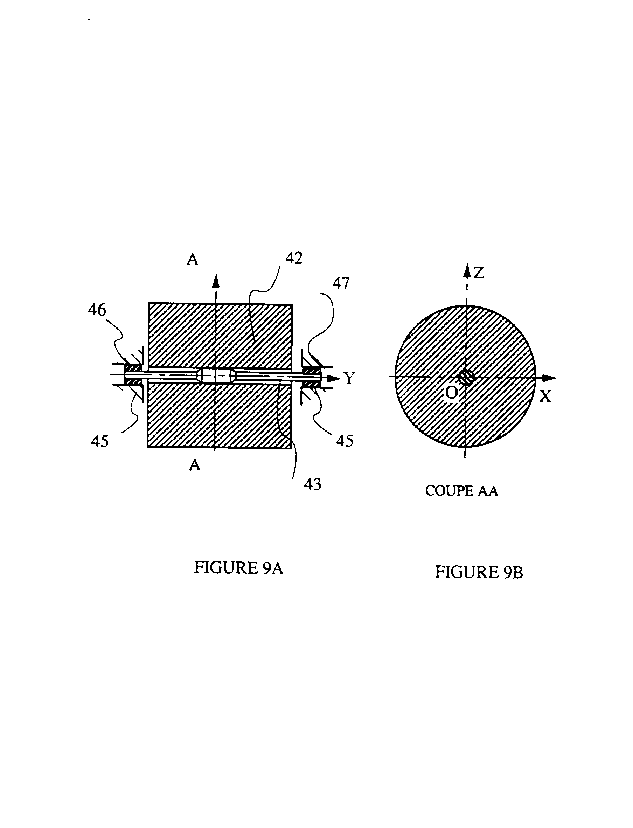

Les figures 9A et 9B représentent une masse cylindrique (42) évidée au centre et fixée à ses 2 bouts à un socle (45) par 2 liaisons élastiques (46) et (47), par exemple 2 cylindres d'élastomères adhésives d'une part à la tige (43) et d'autre part à ce socle (45).

Si k1 est la raideur de flexion de la tige (43), sollicitée par une force appliquée en son plan de symétrie, et M la masse de la masse (42), l'ensemble masse (42) et tige (43) a une fréquence de résonance :

$$f_1 = \frac{1}{2\pi} \sqrt{\frac{k_1}{M}}$$

pour tout mouvement situé dans le plan XOZ.

De même si k2 est la raideur axiale des 2 liaisons élastiques, l'ensemble masse (42), tige (43) et liaisons élastiques (46) et (47), a une fréquence de résonance :

$$f_2 = \frac{1}{2\pi} \sqrt{\frac{k_2}{M}}$$

pour tout mouvement axial selon OY

En ajustant k1 et k2, f1 et f2 peuvent être rendus quasi-identiques, et le dispositif pourrait être utilisé comme amortisseur dynamique tri-axial, très condensé, et très peu encombrant.

Cependant la fréquence de résonance n'étant pas réglable l'utilisation du dispositif est très limitée.

Le dispositif selon 1' invention supprime cet inconvénient :

En ajoutant un moteur électrodynamique composé d'électro-aimants puissants agissant selon 3 axes, immobiles et fixés sur le socle, donc bien refroidis, le dispositif couvre un domaine de fréquences important, non limité aux fréquences propres f1 et f2 ci-dessus.

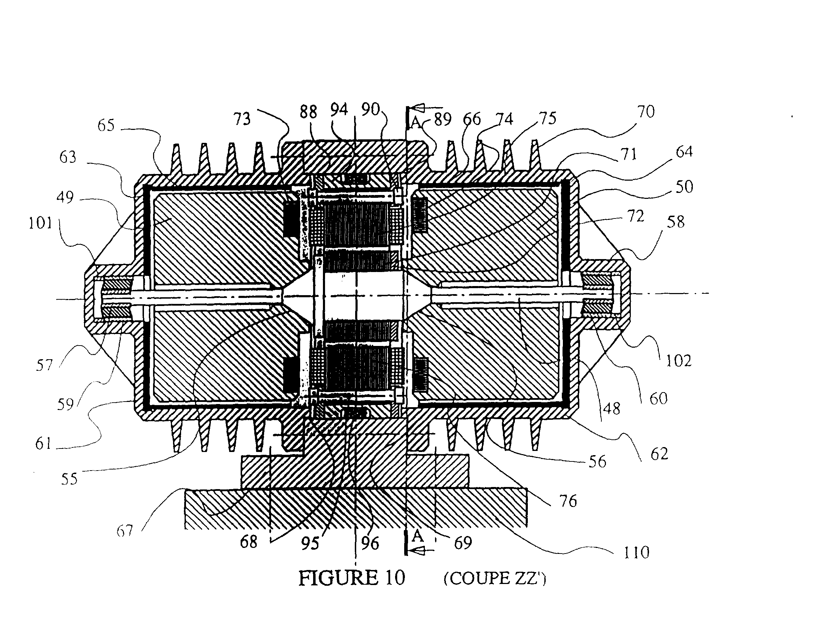

Il comporte 2 sous ensembles distincts: un sous ensemble mécanique et un sous ensemble moteur électrodynamique. Les numéros des descriptions ci-après se réfèrent aux figures 10, 11, 12 et 13 qui décrivent un mode de réalisation préférentiel.

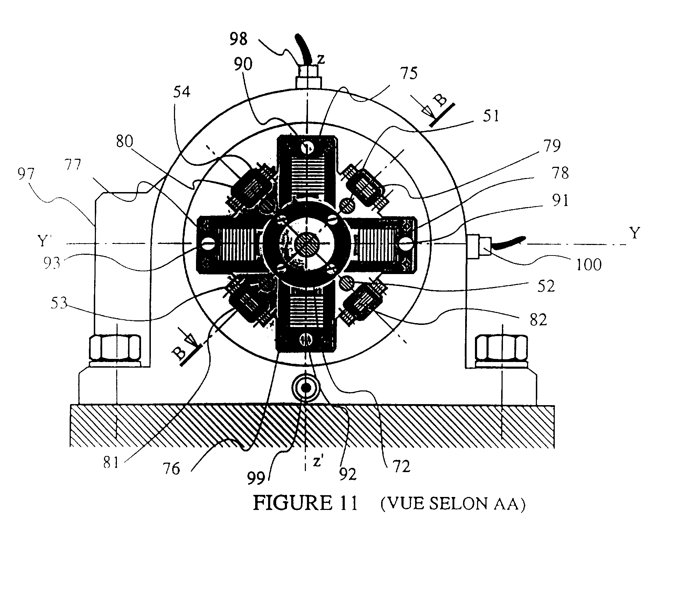

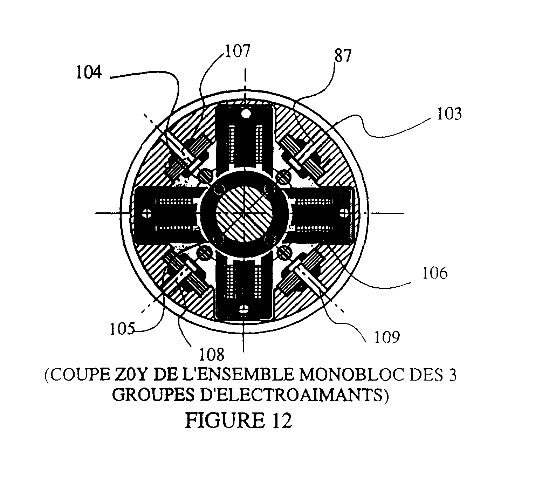

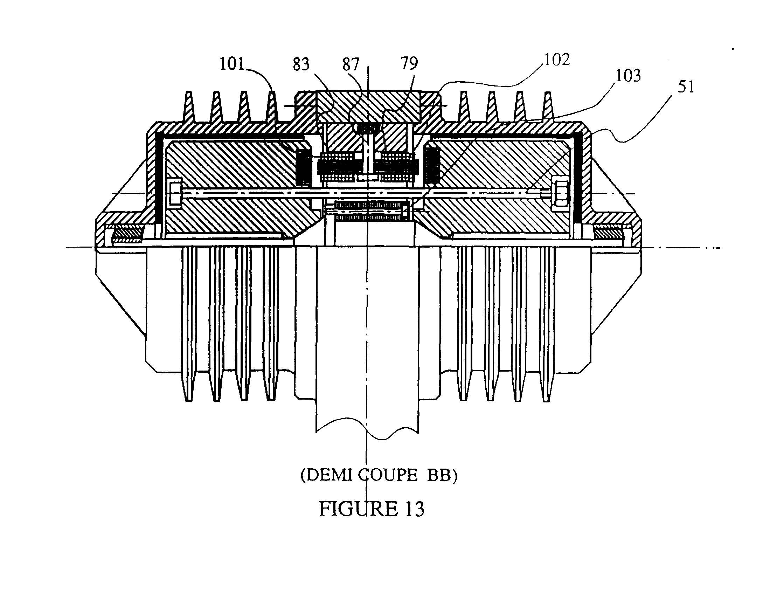

La figure 10 est une coupe longitudinale, la figure 11 une vue selon AA, la figure 12 une section selon le plan Y et la figure 13 une demi-coupe selon un plan passant par l'axe XX et l'axe d'un des électro-aimants d'axe actif XX'.

*Description du sous ensemble mécanique* (figures 10 et suivantes)

Il comporte un tige cylindrique (48) en alliage à haute résistance mécanique, à section variable comportant 2 parties cylindro-coniques (55) et (56) sur lequel sont fixées 2 masses cylindriques (49) et (50) présentant chacune un alésage conique. Quatre tirants (51 à 54) assurent le centrage précis et l'immobilisation de ces 2 masses (49) et (50) et de la tige cylindrique (48) pressées contre les 2 parties cylindro-coniques (55) et (56) de la tige cylindrique (48).

La tige cylindrique (48) comporte 2 longues parties cylindriques fines et souples, terminées chacune par un cylindre épaulé de diamètre réduit sur lequel s'emmanche une articulation élastique (57) à gauche et (58) à droite du dessin figure 10. Ces articulations élastiques dont une variété commerciale est connue sous le nom de "silentbloc" assurent l'immobilisation de la tige (4g), légèrement comprimée axialement et sans jeu par ces 2 articulations élastiques (57) et (58) elles-mêmes bloquées par les alésages épaulés (59) et (60) des capotages (61) et (62), eux-mêmes fixés au support (67), qui assure l'alignement général et le respect des longueurs et est rigidement fixé au bâti dont il faut réduire les vibrations (110).

La particularité mécanique de ces articulations élastiques (57) et (58) est de présenter une très faible rigidité angulaire et axiale, et inversement une forte rigidité radiale.

La tige cylindrique (48) peut donc osciller axialement et fléchir radialement tout en restant centrée par les 2 articulations (57) et (58).

Les débattements radiaux et axiaux du sous ensemble constitué de la tige cylindrique (48) et des masses (49) et (50) sont limités par les butées amortisseurs de chocs latéraux (63) et (64) et radiaux (65) et (66) constitués de plaques ou de tubes en matériaux amortisseurs tel le polyuréthane, les composites fibrés ou autres matériaux amortisseurs connus. L'ensemble des butées forme ainsi un ensemble multidirectionnel.

Lorsque le sous ensemble ci-dessus se trouve en position horizontale, ce qui est le cas le plus fréquent, la souplesse de la tige supportant les masses suspendues (49) et (50) provoque une flèche statique telle que les masses (49) et (50) peuvent venir au contact des amortisseurs de chocs radiaux (65) et (66). Selon l'invention les axes d'usinage des alésages épaulés (59) et (60) sont donc excentrés des axes d'usinage des portées de centrage (68) et (69) lorsque le fonctionnement s'effectue en position horizontale. Une disposition semblable est obtenue par les cales amovibles (101) et (102) qui fournissent un moyen de correction des flèches statiques lors d'utilisation verticale.

Accessoirement, selon l'invention, au cas où le facteur de qualité de la résonance mécanique de l'ensemble mobile est trop élevé, l'espace laissé libre entre les 2 capotages (61) et (62) et les pièces mobiles peut comporter un volume de fluide amortisseur dosé pour ajuster le facteur de qualité à la valeur désirée.

### *Description du sous-ensemble moteur électrodynamique*

Il comporte essentiellement 3 groupes d'électro-aimants formant un ensemble monobloc assurant les déplacements selon les axes XX', YY' et ZZ' totalement imprégnés par un composé à base de résine thermodurcissable de qualité électrotechnique et rigidement fixés au support (67), assurant ainsi un écoulement thermique optimal vers l'extérieur et vers les capotages (61) et (62) servant de refroidisseurs par les ailettes (70). Cet ensemble s'intercale dans l'espace libre séparant les 2 masses (49) et (50).

Pour des raisons de simplicité du dessin, les fils de connexions des électro-aimants ne sont pas représentés.

Selon l'invention, l'attraction magnétique radiale s'effectue au travers de l'entrefer sur l'empilage des tôles d'alliage magnétique doux (71) bloqué sur la partie centrale de la tige cylindrique (48) par la bague (72) et un ensemble de tirants (103), (104), (105) et (106) pressant l'empilage sur l'épaulement de la tige cylindrique (48) prévu à cet effet.

Selon l'invention, l'attraction axiale s'effectue sur les 2 tores (73) et (74) en tôle d'alliage magnétique doux enroulée selon une technique connue, enrobés dans des alvéoles toriques usinées dans les masses (49) et (50) à axe confondu avec l'axe de révolution des dites masses.

Selon l'invention, les électro-aimants (75) et (76) assurent les déplacements vibratoires selon l'axe ZZ', les électro-aimants (77) et (7g) assurent les déplacements vibratoires selon l'axe YY', les 8 électro-aimants (79 à 86) assurent les déplacements vibratoires selon l'axe XX'. Ne sont visibles que les électro-aimants (79 à 82) figure 10, 11 et 12, et l'électro-aimant (83) figure 13. Les électro-aimants (83 à 86) occupent des dispositions symétriques aux électro-aimants (79 à 82) par rapport au plan ZY. Ils sont convenablement imprégnés et collés au support (67) afin d'assurer une rigidité mécanique importante et une conduction thermique très élevée entre les bobines des électro-aimants et le support (67).

La culasse des électro-aimants (75), (76)* (77) et (78) constitués d'un empilage de tôles d'alliage magnétique doux est fixée rigidement au socle (67) par l'intermédiaire de 2 bagues toriques (88) et (89) et de 4 fixations d'un type connu (90 à 93), et d'une pièce de forme (94) au contour épousant la forme extérieure des électro-aimants (75 à 78) et aussi des électro-aimants (79 à 86) et présentant un évidement torique (95) destiné au passage des fils (96) de connexions des bobines des dits électro-aimants. Un boîtier (97) raccorde les fils des bobines aux câbles de liaison provenant des 3 voies de régulation XX', YY' et ZZ'. Trois accéléromètres d'asservissement (98), (99) et (100) sont visibles figure 11. Ils sont destinés à l'asservissement non décrit dans cette invention.

Quatre clavettes (87), (107), (108) et (109) figure 12 dont une est visible (87) figure 13 immobilisent définitivement chaque culasse d'électro-aimants commune à 2 électro-aimants d'axe d'efficacité XX et constituée d'un empilage de tôles d'alliage magnétique doux, les deux bobines (101) et (102) visibles figure 13 ayant des sens d'action opposés et symétriques par rapport au plan ZY.

La commande des électro-aimants s'effectue comme suit: le courant d'excitation d'un électro-aimant est donné par la loi suivante :

Soit F la force à appliquer, positive pour une attraction et négative autrement

$$\text{lorsque F est} > 0, \qquad I = k\sqrt{F}$$
$$\text{avec } k = \text{le facteur de proportionnalité,}$$
$$\text{et lorsque F est} \leq 0, \qquad I = 0.$$

Ainsi chaque électro-aimant d'un groupe ne fonctionne que pendant la moitié du temps d'un cycle, à la manière des amplificateurs électroniques de puissance de classe C.

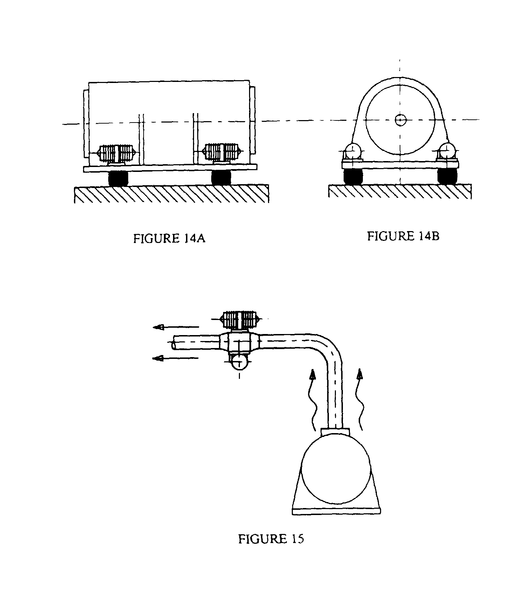

Pour réduire la propagation de vibrations en amont d'une suspension élastique, un seul dispositif selon l'invention suffit (figures 14A et 148), par contre, la réduction de la propagation de vibrations le long de tuyaux, poutres etc nécessite 2 dispositifs selon l'invention qui bloque les 6 degrés de liberté de la vibration (figure 15).

### Revendications

1. Dispositif de réduction des vibrations constitué de deux masses actives animées d'un mouvement plan (19, 22) ou triaxial (49, 50) et de plusieurs moteurs constitués d'électro-aimants (17) et (18) et (75 à 86), supportées par des moyens élastiques constitués de deux plaques cylindriques souples (26) et (27) ou d'une tige cylindrique souple et deux articulations élastiques (48) (57) et (58).

2. Dispositif de réduction des vibrations selon revendication I agissant selon un plan de l'espace pouvant fonctionner à haute température caractérisé en ce qu'il comporte (figure 7) deux masses (19) et (22) vissées sur deux tubes (29) et (30) pivotant autour de deux points M et M' centres de deux plaques cylindriques souples (26) et (27) auxquelles sont fixés des collerettes (31) et (32) terminant les deux tubes (29) et (30), les deux plaques cylindriques (26) et (27) étant réunies par deux âmes cylindriques (23) et (28) à une troisième plaque cylindrique de couplage (24) solidaire d'un support (25) fixé à la structure (41) dont il faut réduire les vibrations par l'intermédiaire d'une semelle en matière isolante de la chaleur (40), comportant à une extrémité de l'âme la plus éloignée de la source de chaleur, par exemple l'âme (23) deux électro-aimants (17) et (18) d'axes perpendiculaires entre eux et forçant la masse en regard (19) à prendre un mouvement vibratoire plan qui se transmet symétriquement à la masse (22) par la plaque de couplage (24).

3. Dispositif selon la revendication 2 caractérisé en ce que la commande des électro-aimants s'effectue en injectant un courant obéissant à la relation :

$$I_{(t)} = k_1 \sqrt{[F_{(t)} + k_2]}$$

avec k1 et k2 constantes et F(t) force excitatrice à appliquer à la masse (3) suffisamment importante pour assurer un fonctionnement dans un domaine de fréquences très large, en deçà et au delà de la fréquence de résonance propre du dispositif.

4. Dispositif de réduction des vibrations selon revendication I agissant selon les 3 dimensions de l'espace fonctionnant aux températures moyennes ou basses caractérisé en ce qu'il comporte (figure 10, 11, 12 et 13) un tige cylindrique (48) en alliage à hautes caractéristiques mécaniques comportant 2 parties cylindro-coniques (55) et (56) sur lesquelles sont fixées 2 masses cylindriques (49) et (50) à alésage conique, la tige cylindrique souple (48) se terminant par deux articulations élastiques (57) et (58) liées à deux capotages (61) et (62) liés à un support (67), les débattements des masses (49) et (50) étant limités par des butées amortisseur de choc multidirectionnelles (63), (64), (65), et (66) et le support (67) comportant un ensemble d'électro-aimants (75) à (86) formant un ensemble monobloc s'intercalant entre les 2 masses (49) et (50).

5. Dispositif de réduction des vibrations selon revendication 4 caractérisé en ce qu'il comporte un moyen de compensation des flèches statiques.

6. Dispositif de réduction des vibrations selon revendication 4 caractérisé en ce qu'il comporte un groupe de 2 électro-aimants (75) et (76) provoquant la mise en vibration des 2 masses selon un axe perpendiculaire à la tige cylindrique (48), un groupe de 2 électro-aimants (77) et (78) provoquant la mise en vibration des 2 masses selon un axe perpendiculaire à la tige cylindrique (4X) et l'axe d'action du premier groupe, un groupe de 8 électro-aimants (79 à 86) provoquant la mise en vibration des 2 masses selon un axe parallèle à l'axe de la tige cylindrique (48).

7. Dispositif de réduction des vibrations selon revendications 4, 5 ou 6 caractérisé en ce que la commande du courant de chaque électro-aimant est semblable au fonctionnement des amplificateurs électronique de classe C selon la loi ci-dessous :
Si F est la force d'attraction à fournir par un électro-aimant, le courant de commande est donné par I = k √F. Il est nul pour les forces de répulsion.

8. Application du dispositif de réduction de vibrations selon l'une des revendications 1 à 7 à la réduction de la propagation de vibrations de pièces ou de machines, telles que conduites, notamment conduites d'amenée de vapeur aux turbines motrices, conduits d'échappement de moteur thermique, supports élastiques, arbres de couche.

**Patentansprüche**

1. Vorrichtung zur Schwingungsverringerung, die aus zwei aktiven Massen, die in eine ebene (19, 22) oder dreiachsige Bewegung (49, 50) versetzt werden, und aus mehreren, von Elektromagneten (17) und (18) und (75 bis 86) gebildeten Antriebselementen besteht, wobei die Massen von elastischen Mitteln getragen werden, die aus zwei biegsamen, zylindrischen Platten (26) und (27) oder einem biegsamen zylindrischen Stab und zwei elastischen Gelenken (48)(57) und (58) bestehen.

2. Vorrichtung zur Schwingungsverringerung nach Anspruch 1, die in einer Ebene des Raums wirkt und bei hohen Temperaturen arbeiten kann, dadurch gekennzeichnet, daß sie zwei Massen (19) und (22) (Figur 7) enthält, die auf zwei Rohre (29) und (30) geschraubt sind, welche um zwei Punkte M und M' schwenken, die die Mitte von zwei biegsamen Platten (26) und (27) bilden, an denen Kragen (31) und (32) befestigt sind, die das Ende der beiden Rohre (29) und (30) bilden, wobei die beiden zylindrischen Platten (26) und (27) von zwei zylindrischen Kernen (23) und (28) mit einer dritten zylindrischen Koppelplatte (24) verbunden werden, die fest mit einem Träger (25) verbunden ist, welcher an der Struktur (41), deren Schwingungen verringert werden sollen, mittels einer Sohlplatte (40) aus wärmeisolierendem Material befestigt ist, die an einem Ende des am weitesten von der Wärmequelle entfernten Kerns, zum Beispiel des Kerns (23), zwei Elektromagneten (17) und (18) aufweist, deren Achsen senkrecht zueinander liegen und die die vor ihnen liegende Masse (19) dazu zwingen, eine ebene Schwingungsbewegung auszuführen, die sich über die Koppelplatte (24) symmetrisch auf die Masse (22) überträgt.

3. Vorrichtung nach Anspruch 2, dadurch gekennzeichnet, daß die Steuerung der Elektromagneten durchgeführt wird, indem man einen Strom zuführt, der der folgenden Gleichung gehorcht:

$$I_{(t)} = k_1 \sqrt{[F_{(t)} + k_2]}$$

wobei $k_1$ und $k_2$ konstant sind und $F_{(t)}$ die an die Masse (3) anzulegende Erregerkraft ist, die groß genug ist, um einen Betrieb in einem sehr großen Frequenzbereich zu gewährleisten, diesseits und jenseits der eigentlichen Resonanzfrequenz der Vorrichtung.

4. Vorrichtung zur Schwingungsverringerung nach Anspruch 1, die gemäß den drei Dimensionen des Raums wirkt und bei mittleren oder niedrigen Temperaturen arbeitet, dadurch gekennzeichnet, daß sie einen zylindrischen Stab (48) (Figuren 10, 11, 12 und 13) aus einer Legierung mit guten mechanischen Eigenschaften aufweist, der zwei zylindro-konische Bereiche (55) und (56) besitzt, an denen zwei zylindrische Massen (49) und (50) mit konischer Bohrung befestigt sind, wobei der biegsame Stab (48) in zwei elastischen Gelenken (57) und (58) endet, die mit zwei Verkleidungen (61) und (62) verbunden sind, welche mit einem Träger (67) verbunden sind, wobei die Ausschläge der Massen (49) und (50) durch multidirektionale Stoßdämpferanschläge (63), (64), (65) und (66) begrenzt werden, und der Träger (67) eine Einheit von Elektromagneten (75) bis (86) aufweist, die eine einstückige Einheit bilden, welche sich zwischen die beiden Massen (49) und (50) schiebt.

5. Vorrichtung zur Schwingungsverringerung nach Anspruch 4, dadurch gekennzeichnet, daß sie ein Mittel zur Kompensierung der statischen Durchbiegungen aufweist.

6. Vorrichtung zur Schwingungsverringerung nach Anspruch 4, dadurch gekennzeichnet, daß sie eine Gruppe von zwei Elektromagneten (75) und (76), die die beiden Massen gemäß einer zum zylindrischen Stab (48) senkrechten Achse in Schwingung versetzen, eine Gruppe von zwei Elektromagneten (77) und (78), die die beiden Massen gemäß einer zum zylindrischen Stab (4X) und zur Aktionsachse der ersten Gruppe senkrechten Achse in Schwingung versetzen, und eine Gruppe von acht Elektromagneten (79 bis 86) aufweist, die die beiden Massen gemäß einer zur Achse des zylindrischen Stabs (48) parallelen Achse in Schwingung versetzen.

7. Vorrichtung zur Schwingungsverringerung nach den Ansprüchen 4, 5 oder 6, dadurch gekennzeichnet, daß die Steuerung des Stroms jedes Elektromagneten gleich dem Betrieb der elektronischen Verstärker der Klasse C gemäß dem nachfolgenden Gesetz ist:
Wenn F die von einem Elektromagneten zu liefernde Anziehungskraft ist, wird der Steuerstrom durch $I = k\sqrt{F}$ gegeben. Für die Rückstoßkräfte ist er null.

8. Anwendung der Vorrichtung zur Schwingungsverringerung nach einem der Ansprüche 1 bis 7 auf die Reduzierung der Ausbreitung von Schwingungen von Bauteilen oder Maschinen wie z.B. Leitungen, insbesondere Dampfzufuhrleitungen zu Antriebsturbinen, Auspuffleitungen von Verbrennungsmotoren, elastische Träger, Mittelstücke einer Welle.

**Claims**

1. Vibration-reducing apparatus comprising two active masses driven in planar (19, 22) or tri-axial (49, 50) motion, and a plurality of motors constituted by electromagnets (17) and (18) and (75 to 86), said active masses being supported by resilient means constituted by two flexible cylindrical plates (26) and (27) or a flexible cylindrical rod and two resilient articulations (48) (57) and (58).

2. Vibration-reducing apparatus according to claim 1, acting in a plane in space and capable of operating at high temperature, the apparatus being characterized in that it comprises (Figure 7) two masses (19) and (22) screwed on to two tubes (29) and (30) pivotally mounted about two center points M and M' of two flexible cylindrical plates (26) and (27) to which terminal flanges (31) and (32) of the two tubes (29) and (30) are fixed, the two cylindrical plates (26) and (27) being united by two cylindrical cores (23) and (28) to a third cylindrical plate (24) for coupling secured to a support (25) fixed to the structure (41) whose vibrations are to be damped by means of a soleplate of thermally insulating material (40), including at one end of the core that is furthest from the heat source, e.g. the core (23), two electromagnets (17) and (18) of mutually perpendicular axes and forcing the facing mass (19) to take up plane vibratory motion which is transmitted symmetrically to the mass (22) by the coupling plate (24).

3. A device according to claim 2, characterised in that the electromagnets are controlled by injecting current satisfying the following relationship :

$$I(t) = k_1 \sqrt{[F(t) + k_2]}$$

with $k_1$ and $k_2$ being constants and F(t) being the exciting force to be applied to the mass (3) of sufficient magnitude to enable operation over a very broad frequency range, below and above the natural resonant frequency of the apparatus.

4. Vibration-reducing apparatus according to claim 1, acting in the three dimensions of space and operating at medium or low temperatures, the apparatus being characterised in that it comprises (Figures 10, 11, 12 and 13) a cylindrical rod (48) of alloy having high mechanical characteristics and including two cylindro-conical portions (55) and (56) on which there are fixed two cylindrical masses (49) and (50) having conical bores, the flexible cylindrical rod (48) terminating in two resilient articulations (57) and (58) linked to two caps (61) and (62) themselves linked to a support (67), the movements of the masses (49) and (50) being limited by multidirectional shock absorbing abutments (63), (64), (65), and (66), and the support (67) including a set of electromagnets (75) to (86) forming a single piece assembly interposed between the two masses (49) and (50).

5. Vibration-reducing apparatus according to claim 4, characterised in that it includes means for compensating static bending.

6. Vibration-reducing apparatus according to claim 4, characterised in that it includes a group of two electromagnets (75) and (76) for setting two masses into vibration along an axis perpendicular to the cylindrical rod (48), a group of two electromagnets (77) and (78) setting the two masses into vibration along an axis perpendicular to the cylindrical rod (48) and the axis on which the first group acts, and a group of eight electromagnets (79 to 86) setting the two masses into vibration along an axis parallel to the axis of the cylindrical rod (48).

7. Vibration-reducing apparatus according to claim 4, 5, or 6, characterised in that control of the current for each electromagnet is similar to the operation of class C electronic amplifiers, in application of the following relationship :
if F is an attractive force to be provided by an electromagnet, then the control current is given by $I = k\sqrt{F}$; otherwise, for repulsive forces, the control current is zero.

8. The use of the vibration-reducing apparatus according to one of claims 1 to 7 in reducing the propagation of vibration in parts or machines such as ducts, in particular ducts for conveying steam to power turbines, exhaust ducts of internal combustion engines, resilient supports, drive shafts.

# EP 0 807 216 B1

FIGURE 1A

FIGURE 1B

DÉTAIL DU MOTEUR
ÉLECTRODYNAMIQUE

FIGURE 2

ZONE CALMÉE

ZONE
VIBRANTE

VERS LA MACHINE
GÉNÉRATRICE

FIGURE 3

16

12

15

16

13

14

11

FIGURE 4A

COUPE DU SUPPORT CENTRAL

FIGURE 4B

FIGURE 5

FIGURE 6

FIGURE 7A

VUE SELON AA

FIGURE 7B

force à appliquer

temps

FIGURE 8A

$\sqrt{force} + k2$

temps

FIGURE 8B

$\sqrt{force+k2}$

courant= k1.

temps

FIGURE 8C

FIGURE 8

FIGURE 9A

COUPE AA

FIGURE 9B

FIGURE 10   (COUPE ZZ')

FIGURE 11   (VUE SELON AA)

(COUPE Z0Y DE L'ENSEMBLE MONOBLOC DES 3
GROUPES D'ELECTROAIMANTS)

FIGURE 12

EP 0 807 216 B1

(DEMI COUPE BB)

FIGURE 13

FIGURE 14A

FIGURE 14B

FIGURE 15